## Europäisches Patentamt

## European Patent Office

## Office européen des brevets

(19)

(11) Veröffentlichungsnummer: **0 032 227**
**B1**

(12) # EUROPÄISCHE PATENTSCHRIFT

(45) Veröffentlichungstag der Patentschrift:
**14.03.84**

(21) Anmeldenummer: **80108068.0**

(22) Anmeldetag: **19.12.80**

(51) Int. Cl.³: **H 01 Q 3/08, H 04 B 7/15**

(54) **Antenne für Erdefunkstellen.**

(30) Priorität: **24.12.79 DE 2952317**

(43) Veröffentlichungstag der Anmeldung:
**22.07.81 Patentblatt 81/29**

(45) Bekanntmachung des Hinweises auf die Patenterteilung:
**14.03.84 Patentblatt 84/11**

(84) Benannte Vertragsstaaten:
**BE FR GB IT LU NL**

(56) Entgegenhaltungen:
**DE - A - 2 037 840**
**DE - A - 2 454 830**
**FR - A - 2 094 116**
**FR - A - 2 247 829**
**FR - A - 2 248 623**
**FR - A - 2 349 969**
**GB - A - 1 537 389**
**US - A - 3 714 660**
**US - A - 4 044 361**
**US - A - 4 126 865**

**IEEE TRANSACTIONS ON COMMUNICATIONS, Band Com-27, Nr. 11, November 1979 TADASHI TAKANO et al. "20, 30 GHz Band Cassegrain Earth Station Antenna for the Japanese Demostic Satellite Communication System" Seiten 1728 bis 1731**

(73) Patentinhaber: **SIEMENS AKTIENGESELLSCHAFT, Berlin und München Wittelsbacherplatz 2, D-8000 München 2 (DE)**

(72) Erfinder: **Dondl, Peter, An der Fuchsenhütte 48, D-6101 Rossdorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 0 032 227

## Antenne für Erdefunkstellen

Die Erfindung betrifft eine auf einen geostationären Erdsatelliten, der im Hinblick auf die Polarisation der von ihm abgestrahlten Welle gegenüber der geographischen Länge seiner Position gierachsenstabilisiert ist, positionsnachführbare Antenne für Erdefunkstellen mit einer Schwenklagerung um zwei senkrecht aufeinander stehende Schwenkachsen, von denen die eine zur Ost-West-Nachführung dient und parallel zur Erdachse verläuft.

Bodenstationsantennen, die zur Positionsnachführung auf einen geostationären Satelliten um zwei senkrecht zueinander stehende Achsen geschwenkt werden können, sind bekannt. Gewöhnlich werden solche Antennen kardanisch gelagert, um eine Schwenkung um eine Azimut- und eine Elevationsachse zu ermöglichen. Außerdem ist der Speisehohlleiter drehbar ausgeführt, um die sich mit der Bewegung des Satelliten ändernde Polarisation der von ihm abgestrahlten Welle nachführen zu können. Es sind demzufolge sowohl für die Position des Satelliten als auch für die Polarisation zwei gesonderte Stellinformationen erforderlich, deren Gewinnung einen erheblichen funktechnischen Aufwand erfordert.

Bei geostationären Satelliten ist die scheinbare Bewegung des Satelliten zur Erde auf wenige Winkelgrade beschränkt; es sind daher Antennenlagerungen bekannt, die nur einen begrenzten Schwenkwinkel in der Deklinations- und Elevationsachse gestatten und deswegen einen verhältnismäßig einfachen Aufbau aufweisen. Will man auch hier die Polarisation nachführen, so muß auch bei diesen vereinfachten Konstruktionen der Speisehohlleiter drehbar ausgestaltet sein.

So ist z. B. ein Richtgestell für Antennen für Erdefunkstellen bekannt, in welchem die Antenne in drei Punkten gelagert ist. Ein Punkt sitzt im Scheitel des Gestells und enthält ein Doppelgelenk, das ein Schwenken der Antenne um eine Stundenachse und um eine Deklinationsachse gestattet. Beide Achsen liegen senkrecht zueinander in einer zur Antennenachse senkrechten Ebene.

Steht eine solche Antenne auf dem Längengrad des Satelliten, so kann eine zusätzliche Polarisationsnachführung entfallen (DE-A-2 454 830).

Aus der US-A-4 126 865 ist eine andere, auf einen geostationären Satelliten nachführbare Bodenstationsantenne bekannt, die zwei senkrecht aufeinander stehende Schwenkachsen aufweist, von denen die eine zur Ost-West-Nachführung dient und parallel zur Erdachse verläuft. Aber auch bei dieser bekannten Antenne müssen zur Polarisationsnachstellung eigens Maßnahmen getroffen werden.

Der Erfindung liegt die Aufgabe zugrunde, eine Erdefunkstelle der erwähnten oder ähnlichen vereinfachten Bauarten so auszubilden, daß unabhängig vom Aufstellungsort und damit der Ablage der geographischen Länge der Erdefunkstelle von der des Satelliten auf eine Polarisationsnachführung verzichtet werden kann.

Die Erfindung setzt dabei einen geostationären Erdsatelliten voraus, der im Hinblick auf die Polarisation der von ihm abgestrahlten Welle gegenüber der geographischen Länge seiner Position gierachsenstabilisiert ist.

Die vorerwähnte Aufgabe wird bei einer Antenne der eingangs genannten Art dadurch gelöst, daß die andere Schwenkachse zur Nord-Süd-Nachführung dient und auf derjenigen Längenkreisebene, in welcher sich die Satellitenposition befindet, senkrecht steht. Wegen ihrer speziellen Ausrichtung wird bei der Erfindung die Elevationsachse als Nord-Süd-Nachführungsachse bezeichnet.

Während bei den bisher allgemein bekannten Antennen für Erdefunkstellen die Hauptstrahlrichtung der Antenne gegenüber der Elevationsachse einen rechten Winkel bildet, weicht bei der erfindungsgemäßen Antennenlagerung dieser Winkel je nach Ablage des Längengrades der Erdefunkstelle von der des Satelliten vom rechten Winkel ab. Dadurch erfährt die Antenne bei der Nord-Süd-Nachführungsbewegung nicht nur eine Elevationsänderung, sondern auch eine geringfügige Rotation. Diese Rotation ist um so größer, je mehr der Winkel zwischen Nord-Süd-Nachführungsachse und Hauptstrahlrichtung der Antenne von 90° abweicht. Durch die oben beschriebene geringfügige Rotation in der Strahlungsachse bei der Nord-Süd-Nachführungsbewegung wird die durch die unvermeidliche Bewegung des Satelliten hervorgerufene Drehung der Polarisationsebene exakt kompensiert; eine zusätzliche und aufwendige Polarisationsnachführung kann damit entfallen.

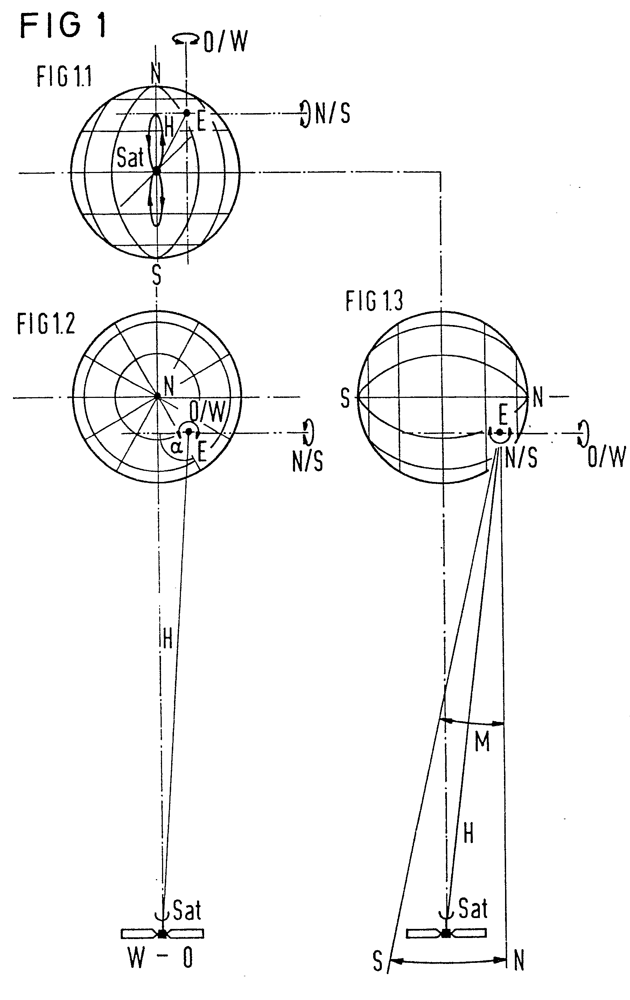

Die technische Lehre der Erfindung gründet sich auf folgende geometrische Überlegungen, die anhand der Fig. 1 angestellt werden sollen.

Fig. 1.1 zeigt in Ansicht die Erdkugel mit Längen- und Breitengraden im 30°-Raster mit der Erdefunkstellenposition E in ca. 50° nördlicher Breite und ca. 45° östlich der Satellitenposition, wobei der Satellit Sat genau vor der Mitte der Erdachse steht. Mit den vier Pfeilspitzen in Form einer Acht ist die Satellitenbewegung innerhalb eines Erdumlaufs schematisch angedeutet. Die Ost-West-Nachführungsachse liegt wie bei bekannten Antennennachführkonstruktionen parallel zur Erdachse, während die Nord-Süd-Nachführungsachse erfindungsgemäß senkrecht auf dem Längenkreis der Satellitenposition steht.

Fig. 1.2 zeigt die gleiche Anordnung in Draufsicht auf den Nordpol. Die Hauptstrahlrichtung H der Erdefunkstellenantenne steht auf der Nord-Süd-Nachführungsachse N/S mit dem Winkel $\alpha$, der in der Regel von 90° abweicht. Der Satellit Sat ist in maßstäblicher Entfernung gezeichnet. Die Pfeile W−O deuten die in Fig. 1.1 dargestellte Bewegung an. Die symmetrisch an dem Satelliten Sat angebrachten

2

Flächen sollen die Solargeneratoren schematisch darstellen.

In der Fig. 1.3 ist die Erdkugel um 90° gedreht. Wie aus der Fig. 1.3 zu erkennen ist, beschreibt der geostationäre Satellit Sat für jede Erdefunkstelle scheinbar einen kleinen Kreisbogen um die Nord-Süd-Nachführungsachse. (Dabei wird die aus Fig. 1.2 erkennbare Ost-West-Verschiebung zunächst vernachlässigt; die durch sie entstehenden Abweichungen werden durch Ost-West-Nachführung ausgeglichen.) Wird nun auch die Antenne um diese Achse gedreht, so überstreicht der Strahl der Erdefunkstelle während der Positionsnachführung den Mantelflächensektor eines sehr flachen Kegels. In Fig. 1.3 ist dieser Sektor M der Kegelmantelfläche gezeichnet, der von dem Strahl der Erdefunkstellenantenne während der Nord-Süd-Nachführungsbewegung überstrichen wird. Diese Bewegung enthält eine lineare und eine rotierende Komponente. Der Teil des Satellitenstrahls, der die Erdefunkstelle erreicht, bleibt mit dem Strahl der Erdefunkstelle deckungsgleich und erfährt ebenfalls dieselben Bewegungskomponenten. Somit ergibt sich aus derPositionsnachführung die Polarisationsnachführung durch die besondere Ausrichtung der Nord-Süd-Nachführungsachse.

Da der Satellit — wie in Fig. 1.2 angedeutet — sich auch in Ost-West-Richtung innerhalb gewisser Toleranzen verschieben kann, ist es notwendig, das ganze System parallel zur Äquatorialebene drehbar zu gestalten. Die Ost-West-Nachführung gleicht durch Drehung der o. g. Nord-Süd-Nachführungsachse unter Beibehaltung der Parallelität zur Äquatorialebene den Fehler, der durch die in der Fig. 1.2 erkennbaren Ost-West-Abweichung des Satelliten entsteht, wieder aus.

Die entsprechend der technischen Lehre der Erfindung ausgerichtete Achse für die Nord-Süd-Nachführung kann auch durch einen Mikroprozessor nachgebildet werden, der die Nachführungseinrichtung einer anders gelagerten Antenne so steuert, als sei die Antenne wie oben beschrieben gelagert.

Zum Aufstellen und Justieren einer Erdefunkstelle, die nach obigem Prinzip positions- und polarisationsnachgeführt wird, müssen folgende Daten bekannt sein:

—  Geographische Breite $\beta$
—  Geographischer Längenabstand zur Satellitennennposition $\lambda$
—  Nord-Süd-Richtung
—  Horizontalebene E′ des geographischen Orts E

Die Ost-West-Nachführungsachse ist auf der nördlichen (südlichen) Halbkugel gegenüber der Horizontalen E′ nach Norden (Süden) geneigt und bildet mit der Horizontalen E′ einen Winkel, der gleich der geographischen Breite des Aufstellungsortes ist ($\beta$). Damit verläuft sie parallel zur Erdachse.

Die Nord-Süd-Nachführungsachse steht senkrecht auf der Ost-West-Nachführungsachse, erhebt sich gegenüber der Horizontalebene E′ mit dem Winkel

$$\delta = \arcsin (\sin \lambda \cdot \cos \beta)$$

in einer Richtung, die auf der nördlichen Halbkugel östlich (westlich) der Satellitenposition von der Südrichtung nach Osten (Westen) um den Winkel

$$\gamma = \arctan \frac{1}{\tan \lambda \cdot \sin \beta}$$

abweicht. Das gilt analog auch für die Südhalbkugel.

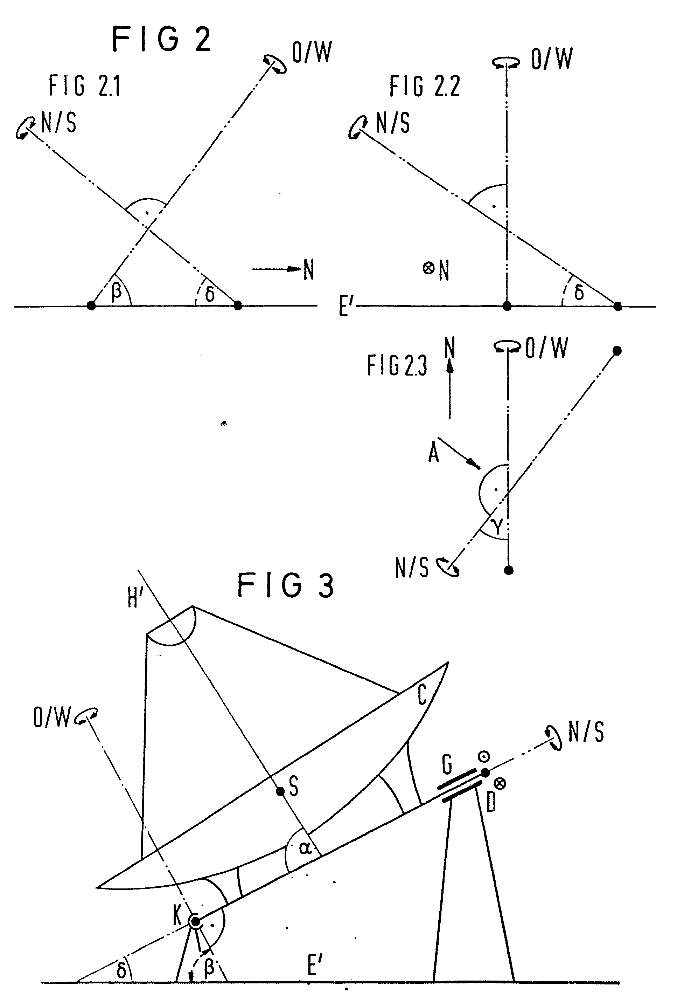

Fig. 2.1 stellt die beiden räumlich senkrecht aufeinander stehenden Nachführungsachsen N/S und O/W als Achsenkreuz über der horizontalen Ebene E′ des Aufstellungsortes der Erdefunkstelle von Osten gesehen dar. Die geographische Position entspricht derjenigen von Fig. 1; die Nordrichtung N liegt in der Zeichenebene rechts. Die Achse O/W liegt in der Zeichenebene, ihr Erhebungswinkel $\beta$ ist in der natürlichen Größe von 50° dargestellt. Die Achse N/S zeigt etwa nach Südwesten; ihr Erhebungswinkel $\delta$ ist auf die Zeichenebene projeziert und deswegen nicht in natürlicher Größe darstellbar.

Fig. 2.2 zeigt die gleiche Darstellung mit der Blickrichtung nach Norden N, dargestellt durch die Pfeilspitze N; die beiden Nachführungsachsen liegen nicht in der Zeichenebene.

Fig. 2.3 zeigt das gleiche Achsenkreuz in der Draufsicht mit der Nordrichtung N nach oben. Der Winkel $\gamma$ zeigt die Abweichung der Nachführungsachse N/S von der Nord-Süd-Richtung bzw. der Erdachse. Der Pfeil A stellt die Blickrichtung dar, die für die Darstellung der nachfolgend beschriebenen Antenne der Fig. 3 verwendet wird.

In der Fig. 3 ist ein Ausführungsbeispiel der Erfindung in einem Prinzipschema näher erläutert. Auf der Erdoberfläche E′ ist eine Richtantenne C — im vorliegenden Falle eine Cassegrain-Antenne mit nicht näher bezeichnetem Haupt- und Hilfsreflektor — an den beiden Punkten K und D beweglich auf nicht näher bezeichneten starren Stützen gelagert. Der Punkt K stellt ein Kugelgelenk dar. Er erlaubt demzufolge einmal die Drehung um die Ost-West-Achse O/W in der durch den Kreispfeil O/W angedeuteten Weise aus der Zeichenebene heraus bzw. in sie hinein auf einem auf wenige Winkelgrade beschränktem Kreissegment über die gleitende Lagerung G am Angriffspunkt D. Zum anderen erlaubt das Kugelgelenk K die Schwenkung der Antenne um die Nord-Süd-Achse in der durch den Kreispfeil N/S angedeuteten Weise, wobei die Schwenkkräfte am Schwerpunkt S angreifen. Die beiden senkrecht aufeinanderstehenden Achsen sind entsprechend den Winkeldarstellungen 2.1 bis 2.3 angeordnet. Die Antenne C ist auf der Nord-Süd-Nachführungsachse N/S so montiert, daß die Hauptstrahlungsrichtung H' mit der Nord-Süd-Nachführungsachse den Winkel

$$\alpha = \arctan \frac{\sqrt{(r - R \cdot \cos\beta \cdot \cos\lambda)^2 + R^2 \cdot \sin^2\beta}}{R\cos\beta \cdot \sin\lambda}$$

bildet. (Die in Fig. 3 dargestellte Hauptstrahlungsrichtung H' ist mit der wirklichen Hauptstrahlungsrichtung H von Fig. 1 nicht identisch, da sonst der Winkel $\alpha$ nicht in natürlicher Größe darstellbar ist!)
Bei vorstehenden Angaben bedeuten:

R = Erdradius,
r = Abstand Satellit—Erdmittelpunkt,
$\alpha$ = Winkel Hauptstrahlrichtung (H) der Antenne zur Nord-Süd-Nachführungsachse (N/S),
$\beta$ = geographische Breite = Erhebungswinkel der Ost-West-Nachführungsachse (O/W),
$\gamma$ = Richtungsabweichung der Nord-Süd-Nachführungsachse (N/S) von Süden (Norden),
$\delta$ = Erhebungswinkel der Nord-Süd-Nachführungsachse (N/S),
$\lambda$ = Differenz der geographischen Längen von Erdefunkstelle und Satellitenposition.

## Patentansprüche

1. Auf einen geostationären Erdsatelliten (Sat), der im Hinblick auf die Polarisation der von ihm abgestrahlten Welle gegenüber der geographischen Länge seiner Position gierachsenstabilisiert ist, positionsnachführbare Antenne für Erdefunkstellen (E) mit einer Schwenklagerung um zwei senkrecht aufeinander stehende Schwenkachsen (O/W; N/S), von denen die eine (O/W) zur Ost-West-Nachführung dient und parallel zur Erdachse verläuft, dadurch gekennzeichnet, daß die andere Schwenkachse (N/S) zur Nord-Süd-Nachführung dient und auf derjenigen Längenkreisebene, in welcher sich die Satellitenposition befindet, senkrecht steht.

2. Antenne nach Anspruch 1, dadurch gekennzeichnet, daß die Nord-Süd-Nachführungsachse (N/S)

a) gegenüber der Horizontalebene (E') am Antennenaufstellungsort den Winkel

$$\delta = \arcsin(\sin\lambda \cdot \cos\beta)$$

bildet,

b) gegen eine Richtung geneigt ist, die vom Längenkreis in der Richtung zum Äquator um den Winkel

$$\gamma = \arctan \frac{1}{\tan\lambda \cdot \sin\beta}$$

abweicht, und zwar östlich der Satellitenposition nach Osten und westlich der Satellitenposition nach Westen,

c) mit der Antennenhauptstrahlungsrichtung den Winkel

$$\alpha = \arctan \frac{\sqrt{(r - R \cdot \cos\beta \cdot \cos\lambda)^2 + R^2 \cdot \sin^2\beta}}{R\cos\beta \cdot \sin\lambda}$$

bildet, wobei in allen Formeln R für den Erdradius, r für den Abstand Satellit—Erdmittelpunkt, $\beta$ für die geographische Breite des Aufstellungsortes (E) der Erdefunkstelle und $\lambda$ für den geographischen Längenunterschied vom Aufstellungsort (E) der Erdefunkstelle von der Satellitensollposition (Sat) steht (Fig. 2, Fig. 3).

3. Antenne nach Anspruch 1 und 2, dadurch gekennzeichnet, daß die Ost-West-Nachführungsachse (O/W) mit der Horizontalen einen Winkel $\beta$ bildet, der der geographischen Breite des Aufstellungsortes (E) entspricht und auf der nördlichen Halbkugel nach Norden und auf der südlichen Halbkugel nach Süden geneigt ist.

## Claims

1. An antenna for ground radio stations (E) whose position can be set with respect to a geostationary earth satellite (Sat) which is yaw-axis-stabilised in respect of the polarisation of its transmitted wave relative to the geographical longitude of its position, the antenna having a pivot bearing about two pivot axes (O/W; N/S) mutually at right angles, of which one (O/W) serves for East-West follow-up and runs parallel to the earth's axis, characterised in that the other pivot axis (N/S) serves for North-South follow-up and is at right angles to the meridian plane in which the satellite is positioned.

2. An antenna as claimed in Claim 1, characterised in that the North-South follow-up axis (N/S):

a) forms the angle

$$\delta = \arcsin (\sin \lambda \cdot \cos \beta)$$

relative to the horizontal plane (E') at the location of the antenna;

b) is inclined in a direction which deviates from the meridian in the direction towards the equator by the angle

$$\gamma = \arctan \frac{1}{\tan \lambda \cdot \sin \beta}$$

and in fact East of the satellite position towards the East and West of the satellite position towards the West; and

c) forms the angle

$$\alpha = \arctan \frac{\sqrt{(r - R \cdot \cos \beta \cdot \cos \lambda)^2 + R^2 \cdot \sin^2 \beta}}{R \cos \beta \cdot \sin \lambda}$$

with the antenna main beam direction; where in all the formulae:

R = the earth's radius,
r = the distance between the satellite and the centre of the earth;
$\beta$ = the geographical latitude of the location (E) of the ground radio station, and
$\lambda$ = the difference in longitude between the location (E) of the ground radio station and the theoretical position of the satellite (Sat) (Fig. 2, Fig. 3).

3. An antenna as claimed in Claim 1 and 2, characterised in that the East-West follow-up axis (O/W) forms and angle $\beta$ with the horizontal plane, which angle corresponds to the latitude of the location (E), and is inclined towards the North in the northern hemisphere and inclined towards the South in the southern hemisphere.

## Revendications

1. Antenne pour poste radioélectrique terrestre (E), asservie en position sur un satellite de Terre (Sat) géostationnaire qui, du point de vue de la polarisation de l'onde irradiée par lui, est stabilisée en ses axes de rotation par rapport à la longitude de sa position, du type dans laquelle il est prévu un montage articulé autour de deux axes d'articulation (O/W; N/S) perpendiculaires entre eux et dont l'un (O/W) sert à l'asservissement est-ouest et s'étend parallèlement à l'axe de la Terre, caractérisée par le fait que l'autre axe d'articulation (N/S) sert à l'asservissement nord-sud et est perpendiculaire au plan du cercle de longitude dans lequel se trouve la position du satellite.

2. Antenne selon la revendication 1, caractérisée par le fait que l'axe d'asservissement nord-sud (N/S)

a) forme par rapport au plan horizontal (E'), au lieu dent montage de l'antenne, un angle

$$\delta = \text{arcsinus} (\sin \lambda \cdot \cos \beta),$$

b) est incliné par rapport à une direction qui s'écarte du cercle de longitude en direction de l'équateur de l'angle

$$\gamma = \text{arctg} \frac{1}{\text{tg} \lambda \cdot \sin \beta},$$

plus particulièrement à l'est de la position du satellite vers l'est et à l'ouest de la position du satellite ves l'ouest,

c) forme avec la direction du centre du rayonnement de l'antenne un angle

$$\alpha = \text{arctg} \frac{\sqrt{(r - R \cdot \cos \beta \cdot \cos \lambda)^2 + R^2 \cdot \sin^2 \beta}}{R \cos \beta \cdot \sin \lambda}$$

5

R représentant le rayon de la Terre, r la distance entre le satellite et le centre de la Terre, $\beta$ la latitude géographique de l'emplacement de montage (E) du poste radioélectrique et $\lambda$ la différence de la longitude géographique entre l'emplacement de montage (E) du poste rdioélectrique et celle de la position de consigne du satellite (Sat) (figure 2, figure 3).

3. Antenne selon la revendication 1 et 2, caractérisée par le fait que l'axe d'asservissement est-ouest (O/W) forme avec l'horizontale un angle $\beta$ qui correspond à la latitude géographique de l'emplacement de montage (E) et est incliné vers le nord sur l'hémisphère nord et vers le sud sur l'hémisphère sud.

FIG 1

FIG 1.1

FIG 1.2

FIG 1.3

# F I G 2

### FIG 2.1

### FIG 2.2

### FIG 2.3

# F I G 3